# EUROPEAN PATENT SPECIFICATION

(11) **EP 0 636 574 B1**
(45) Date of publication and mention of the grant of the patent: **09.10.2002**
(21) Application number: 94830311.0
(22) Date of filing: 23.06.1994
(51) Int. Cl.: B67C 3/20, B67C 3/22

(54) **Method for continuously checking the weight of bottles and apparatus for carrying out such method**
Verfahren und Vorrichtung zum kontinuierlichen Kontrollieren des Gewichtes von Flaschen
Méthode et dispositif pour contrôle en continu du poids des bouteilles

(30) Priority: 23.06.1993 IT BO930287
(43) Date of publication of application: 01.02.1995
(73) Proprietor: MARCHESINI GROUP S.p.A., I-40065 Pian di Macina Pianoro (Bologna) (IT)
(72) Inventor: Monti, Giuseppe, Pianoro (Bologna) (IT)
(74) Representative: Dall'Olio, Giancarlo

(56) References cited:
- EP-A- 0 298 407
- WO-A-83/03235
- DE-C- 269 362
- DE-C- 3 048 257
- GB-A- 1 107 658

## Description

The present invention relates to the technical field concerning weight-checking while filling bottles and the like with products.

It is known that, during the phase of filling the bottles, the weight of the bottles is checked to verify whether such filling corresponds to prefixed values.

In particular, the empty bottles are weighed, before being filled, and subsequently, the full bottles are weighed before being closed by traditional caps or covers with metal rings.

Various realisations of the weight check are known, mostly very complicated, that usually check only samples from the bottles.

A known apparatus for the bottles filling feed said bottles to a filling carousel by a conveying belt cooperating with an Archimedean screw, placed over it and rotating according to a longitudinal axis parallel to the same conveying belt.

The Archimedean screw separates the bottles that are arranged at regular distances one from the other so as to be subsequently brought, in an orderly manner, to the above mentioned filling carousel.

The bottles are weighed at a turning star-like transferring device, that, rotating in suitable phase relation, takes the bottles fed by the above mentioned Archimedean screw and transfers them regularly to the filling carousel.

The transferring device is equipped with means designed to select the bottles that, according to the pre-fixed sampling, are then transferred to suitable weighing means, before being directed to the filling phase of the above mentioned carousel.

A similar turning star-like device, placed at the exit of the filling carousel, selects the same bottles so as to weigh them after they have been filled with the product.

Obviously, the weight control executed on the sampling does not guarantee the effective correspondence of the weight of all the bottles to the prefixed value.

It is also to be remembered that during the above mentioned transferring of the selected bottles to the weighing means, it is necessary to keep regular the distribution of the same bottles, that results in further increase of structural complexity of such apparatus.

The object of the present invention is to propose a method that allows for a continuous check of the weight of the bottles, when they are filled, keeping regular the reciprocal distance of the same bottles along the production line.

A further object of the present invention is to provide an apparatus that carries out such method and that comprises a structure of simple concept, limited size and reliable use.

The listed objects are obtained in accordance with claims.

The characteristics of the invention are pointed out in the following, with particular reference to the enclosed drawing tables, in which:

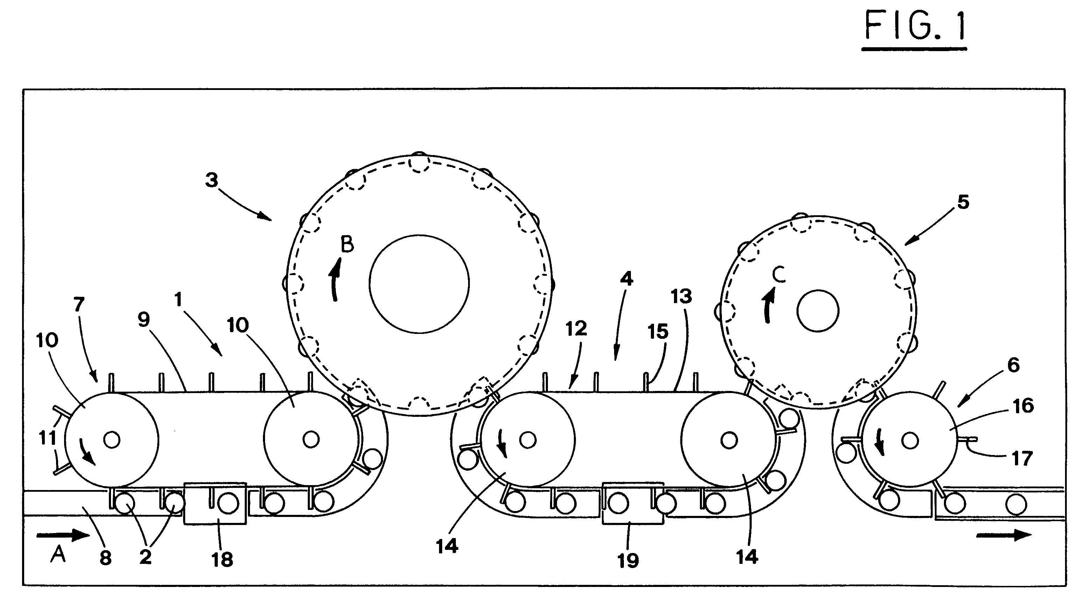

- fig. 1 shows a schematic plan view of the subject apparatus;
- fig. 2 shows an enlarged plan view of a part of such apparatus;
- fig. 3 shows a view in elevation correspondent to the plan view of fig. 2;
- fig. 4 shows an enlarged view, as in fig. 2, of a different embodiment of the apparatus;
- fig. 5 shows a different embodiment of the present invention.

With reference to the above described figures, the reference numeral 1 indicates a device for feeding bottles 2 to a known filling carousel 3 that rotates about a vertical axis in the direction indicated with the arrow B.

The star-like carousel 3 is designed to convey peripherally the bottles 2 to be filled, regularly spaced apart from one another.

At the exit of the filling carousel 3, the bottles 2 are taken by a transferring device 4 that feeds a capping star-like carousel 5 also rotating about a vertical axis in the direction indicated with the arrow C.

At the exit of the capping carousel 5, there is a device 6 for moving away the bottles 2.

The feeding device 1 has a conveying means 7, joined to a running plane 8 for the bottles 2 integral with the fixed framework of the apparatus.

The bottles 2, suitably guided by the sides of the running plane 8, move forwards therealong, in the direction indicated with the arrow A.

The conveyor 7 includes a belt 9, e.g. made of metal, preferably steel, that is mounted on a pair of wheels 10 having vertical axis.

On the outer surface, the belt 9 carries a plurality of protruding transversal crosspieces 11, regularly spaced apart from each other, which are designed to engage the bottles 2 in correspondence with an active part of the conveyor 7.

The bottles 2 are transported by the conveyor 7 with a tip speed W1 correspondent to the speed of the carousel 3.

The transferring device 4 includes also a conveyor 12 constituted by a belt 13, e.g. made of metal, preferably of steel, that is mounted on a pair of wheels 14 having vertical axis, and that carries protruding transversal crosspieces 15.

The device 6, aimed at moving away the bottles, comprises only one wheel 16 rotating about a vertical axis and equipped with similar radial crosspieces 17.

The subject apparatus includes respective weighing means 18 and 19, in correspondence with the feeding device 1 and transferring device 4, said weighing means being to weigh the bottles 2, respectively before the filling and subsequently after the filling.

The weighing means 18, 19 are inserted in-line in the above mentioned devices 1, 4, so as to weigh continuously all the bottles 2 carried by the conveyers 7, 12.

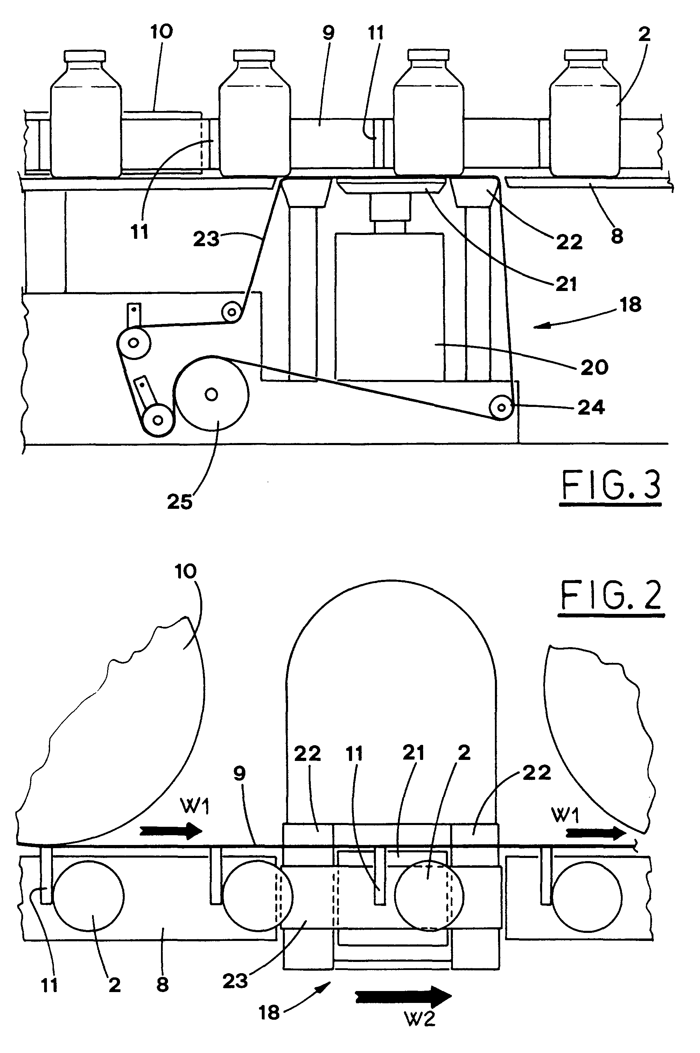

As seen in detail in figures 2 and 3, the weighing means 18 and 19 are similarly constituted by an electronic balance 20 situated in correspondence with an opening of the running plane 8 for the bottles 2; in fact, the plate 21 of the balance 20 is coplanar with the above mentioned running plane 8, to which it is connected by fixed supports 22 designed to maintain a limited break in the same plane.

The upper run of the conveying belt 23, that is mounted on a series of return rolls 24, slides over the plate 21 of the balance 20 and on the supports 22.

Said upper run of the conveying belt 23 is operated by a pulley 25 connected with a suitable driving means, and it constitutes a joining section for the running plane 8 on which the bottles 2 are transported.

Tip speed W2 of the transporting belt 23 is suitably bigger than the speed W1 of the conveyors 7, 12, so that, in correspondence with the weighing means 18, 19, the bottles 2 move forward quicker than the relative belts 9, 13 and they separate from the transversal crosspieces 11, 15 (see Figures 2 and 3).

At the exit of the weighing means 18, 19, the bottles 2 are again engaged at the back by the crosspieces 11, 15 of the conveyors 7, 12, which move them along the running plane 8.

Therefore, the method for the continuous check of the weight of the bottles 2, provides for weighing in-line the same bottles before filling in the carousel 3 and subsequently, after filling, before the capping in the carousel 5.

Such weighing is carried out by the weighing means 18, 19 that are independent from the feeding and transporting line for the bottles 2.

In fact, in correspondence with the electronic balances 20, the bottles 2 are transported by respective conveying belts 23, supported independently and released from the conveyors 7, 12.

Moreover, as it has already been said, the difference between the tip speed W2 of the belts 23 and the tip speed W1 of the conveyors 7, 12, causes a temporary separation of the bottles 2 from the crosspieces 11, 15 of the same conveyors 7, 12 for a complete disengagement of the bottles from the feeding and transporting line.

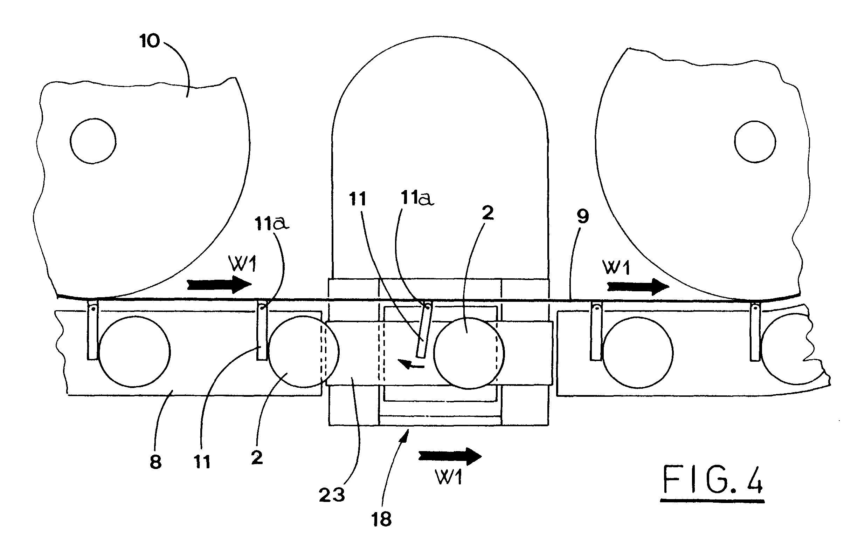

Such a result can be also obtained by hinging the crosspieces 11, 15, to the belts 9, 13 by means of respective vertical .pins 11a, as illustrated in figure 4.

In correspondence to the weighing means 18, 19, special striking means, not seen in the drawing, provoke the angular rotation of the crosspieces 11, 15, against the reaction of special elastic means, so as to separate the crosspieces 11, 15 from the bottles 2.

Obviously, in this case, the conveying belt 23 of the weighing means 18, 19 will move with the same tip speed W1 of the conveyors 7, 12.

What has just been illustrated permits to weigh with maximum reliability, avoiding interferences of the means normally aimed at transporting the bottles.

Then, the measured values are suitably processed to obtain automatically the weight of the products in the single bottles.

It is also to be pointed out that the weighing does not damage the reciprocal position of the bottles 2, i.e. the regular distance between the same bottles, therefore at the exit of the weighing means 18, 19, said bottles 2 are arranged so as to be subsequently received by the filling carousel 3 and the capping carousel 5.

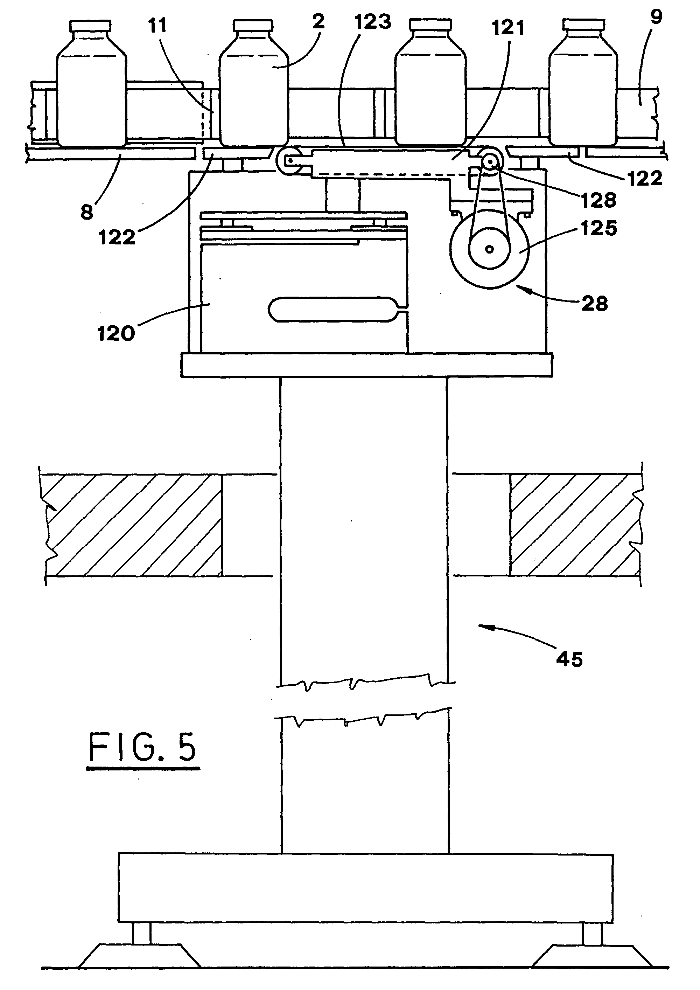

In accordance with a further embodiment of the invention, that is shown in fig. 5, the apparatus includes weighing means which are removably associated thereto.

In other words, the weighing means 28 are mounted on a support frame 45 and are positioned in correspondence with an opening made in the running plane 8 (see Fig. 5).

In this embodiment the balance plate 121 is hinged at one end to the support frame, so that it can swing about the horizontal axis 128.

The free end of the plate 121 rests on the balance 120. The plate 121 is equipped with a transport endless belt 123 that is located with its upper run at the same level as the running plane 8.

The endless belt 123 is driven by driving means 125, e.g. an electric motor, so that the upper run of the endless belt moves in accordance with the motion direction of the belt 9, slightly faster than this latter.

Two link supports 122 connect the upper run of the belt 123 with the upstream and downstream sections of the running plane 8.

Advantageously, in this embodiment the endless belt 123 is driven fully independent from the general driving of the packaging machine. Furthermore, the weighing means, along with the support frame 45, can be easily extracted from the machine and readily set in another machine, for instance a batching machine, without adjustment operation.

Also in this case, the bottles 2 running along the plane 8 reach the endless belt 123 and are made to advance a bit faster that the belt 9, so as to separate from the related crosspiece 11.

After weighing the bottles 2 reach the downstream section of the running plane 8 and then are again to advance by the respective crosspieces.

Obviously, the endless belt 128 can be replaced with a pair of narrower belt arranged side by side.

In conclusion, the proposed method and apparatus allow to control continuously the weight of all the bottles during the filling, maintaining the reciprocal regular distance of the same bottles along the production line.

## Claims

1. Apparatus for continuously checking the weight of bottles in a machine wherein the bottles are moved along running planes (8) by conveyors (7,12) equipped with belts (9,13) mounted on pairs of wheels (10,14) having a vertical axis, said belts having regularly spaced out crosspieces (11,15) for engaging the bottles, so that said bottles are fed to and moved away from a carousel (3) for filling the same bottles (2), with weighing means (18,19) arranged in line with said belt conveyors (7,12), the apparatus being **characterised in that** said running planes (8) feature each one an opening in the region of which said weighing (18,19) means are located, **in that** said weighing means (18,19) include each one a conveyor belt (23) having an upper run making a joining section for the running plane (8) and an electronic balance placed under said conveyor belt (23), said bottles (2) being moved away from said crosspieces (11,15) while being weighed.

2. Apparatus, according to claim 1, **characterised in that** the plate of said balance (20) is substantially coplanar with said running plane (8).

3. Apparatus, according to claim 2, **characterised in that** said upper run of said conveyor belt (23) slides over the plates (21) of the electronic balance (20) and makes a joining section between the sections of said running plane (8) divided by said opening.

4. Apparatus, according to claim 1, **characterised in that** said electronic balance is mounted on a support frame (45) independent from the structure of the machine, so that it can be extracted from the machine and readily set on another machine.

5. Apparatus according to claim 1, **characterised in that**:
said electronic balance includes a plate (121) hinged at one end to said support frame, so that it can swing about a horizontal axis (128), with the free end of the said plate (121) resting on the balance (120);
said conveyor belt is an endless belt (123) and is mounted on said plate (121), that is located with its upper run at the same level as the running plane (8);
driving means (125) are linked to said endless belt (123) and are so operated that the upper run of the endless belt moves in accordance with the motion direction of the belt (9), slightly faster than this latter;
two link supports (122) connect the upper run of the endless belt (123) with the upstream and downstream sections of the said running plane (8).

6. Apparatus, according to claim 1, **characterised in that** said crosspieces (11, 15) are hinged to said belts (9, 13) on respective vertical pins (11a), and are designed to engage, in correspondence with said weighing means (18, 19) suitable striking means that have the task of provoking backward rotation of the same crosspiece (11, 15), against the reaction of suitable elastic means, so as to cause the separation of said crosspiece (11, 15) from said bottles (2).

7. Method for continuously checking the weight of bottles in a machine wherein the bottles are moved along running planes (8) by conveyors (7,12) equipped with belts (9,13) mounted on pairs of wheels (10,14) having a vertical axis, said belts having regularly spaced out crosspieces (11,15) for engaging the bottles, so that said bottles are fed to and moved away from a carousel (3) for filling the same bottles (2), with weighing means (18,19) arranged in line with said belt conveyors (7,12), the method being **characterised in that** it includes moving forward the bottles (2) during weighing step by means of a conveyor belt (23) having an upper run making a joining section for the running plane (8) and an electronic balance placed under said conveyor belt (23), so that the bottles are made independent from said conveyors (7,12) during weighing.

8. Method according to claim 7, **characterised in that** said conveyor belt (23) is moved faster than said belts (9,13) of said conveyor (7,12) so as to move forward the bottles (2) with respect to the crosspieces (11,15).

9. Method according to claim 7, **characterised in that** the tip speed (W2) of the said conveyor belt(23) is equal to the speed (W1) of said conveyors (7, 12) and the crosspieces (11,15) are turned backward by striking means so as to make said bottles (2) separate from the same crosspieces (11,15).

## Patentansprüche

1. Vorrichtung zum kontinuierlichen Kontrollieren des Gewichtes von Flaschen innerhalb einer Einrichtung, in der die Flaschen entlang von Laufbahnen (8) durch Fördereinrichtungen (7, 12) bewegt werden, die mit Förderbändern (9, 13) ausgestattet sind, die auf einem Paar von Laufrädern (10, 14) angeordnet sind, die mit vertikalen Achsen ausgestattet sind und wobei die Förderbänder mit regelmäßigen Abständen zueinander angeordnete Querstücke (11, 15) aufweisen, um die Flaschen derart zu beaufschlagen, daß die Flaschen gefördert und von einem Karussell (3) zur Befüllung der Flaschen (2) wegbewegt werden, wobei Wiegeeinrichtungen (18, 19) im Bereich der Fördereinrichtungen (7, 12) angeordnet sind, **dadurch gekennzeichnet, daß** die Laufbahnen (8) jeweils eine Öffnung aufweisen, die in einem Bereich positioniert ist, in dem die Wiegeeinrichtungen (18, 19) angeordnet sind und daß die Wiegeeinrichtungen (18, 19) jeweils ein Förderband (23) aufweisen, das einen oberen Lauf aufweist, der einen Verbindungsbereich zur Laufbahn (8) bereitstellt und mit einer elektronischen Waage versehen ist, die unterhalb des Förderbandes (23) angeordnet ist, wobei die Flaschen (2) von den Querstücken (11, 15) während der Durchführung des Wiegevorganges wegbewegt werden.

2. Vorrichtung nach Anspruch 1, **dadurch gekennzeichnet, daß** die Tragplatte der Waage (20) im wesentlichen coplanar zur Laufbahn (8) angeordnet ist.

3. Vorrichtung nach Anspruch 2, **dadurch gekennzeichnet, daß** der obere Lauf des Förderbandes (23) oberhalb der Tragplatte (21) der elektronischen Waage (20) verläuft und einen Verbindungsbereich zwischen den Bereichen der Laufbahn (8) bereitstellt, die durch die Öffnung geteilt ist.

4. Vorrichtung nach Anspruch 1, **dadurch gekennzeichnet, daß** die elektronische Waage auf einem Tragrahmen (45) angeordnet ist, der unabhängig von der Struktur -der Einrichtung ausgebildet ist, so daß dieser aus der Einrichtung herausgenommen und schnell in eine andere Einrichtung eingesetzt werden kann.

5. Vorrichtung nach Anspruch 1, **dadurch gekennzeichnet, daß**
die elektronische Waage eine Platte (121) aufweist, die im Bereich eines Endes gelenkig mit dem Tragrahmen verbunden ist, so daß sie um eine horizontale Achse (128) herum verschwenkbar ist und wobei das freie Ende der Platte (121) auf der Waage (120) verbleibt;
das Förderband ist als ein Endlosband (123) ausgebildet und auf der Platte (121) befestigt, wobei die Anordnung eines oberen Laufes auf einem selben Niveau wie das der Laufbahn (8) erfolgt;
Antriebsmittel (125) sind mit der endlosen Laufbahn (123) verbunden und werden derart gesteuert, daß der obere Lauf der endlosen Laufbahn sich in Übereinstimmung mit der Bewegungsrichtung des Förderbandes (9) und geringfügig schneller als der letztere bewegt;
zwei Verbindungsträger (122) verbinden den oberen Lauf der endlosen Laufbahn (123) mit den in Förderrichtung oberhalb und unterhalb angeordneten Bereichen der Laufbahn (8).

6. Vorrichtung nach Anspruch 1, **dadurch gekennzeichnet, daß** die Querstücke (11, 15) gelenkig mit den Förderbändern- (9, -13) über zugehörige vertikale Stifte (11a) verbunden sind und dafür vorgesehen sind, in Zusammenwirkung mit den Wiegeeinrichtungen (18, 19) in zugehörige Betätigungsmittel einzugreifen, die dafür vorgesehen sind, eine Rückwärtsrotation der Querstücke (11, 15) entgegen der Wirkung geeigneter elastischer Mittel hervorzurufen, so daß eine Trennung der Querstücke (11, 15) von den Flaschen (2) hervorgerufen wird.

7. Verfahren zum kontinuierlichen Kontrollieren des Gewichtes von Flaschen innerhalb einer Einrichtung, in der die Flaschen entlang von Laufbahnen (8) durch Fördereinrichtungen (7, 12) bewegt werden, die mit Förderbändern (9, 13) ausgestattet sind, die auf Paaren von Laufrädern (10, 14) angeordnet sind, welche vertikale Achsen besitzen, wobei die Förderbänder in regulären Abständen zueinander angeordnete Querstücke (11, 15) aufweisen, um die Flaschen zu beaufschlagen, so daß die Flaschen gefördert und von einem Karussell (3) zur Befüllung der Flaschen (2) wegbewegt werden, und bei dem Wiegeeinrichtungen (18, 19) im Bereich der Fördereinrichtungen (7, 12) angeordnet sind, **dadurch gekennzeichnet, daß** ein Verfahrensschritt zur Vorwärtsbewegung der Flaschen (2) während des Wiegeschrittes unter Verwendung eines Förderbandes (23) durchgeführt wird, das einen oberen Lauf zur Bereitstellung eines Verbindungsbereiches für die Laufbahn (8) besitzt und das mit einer elektronischen Waage versehen ist, die unterhalb des Förderbandes (23) angeordnet ist, so daß die Flaschen unabhängig von den Fördereinrichtungen (7, 12) während der Durchführung des Wiegeschrittes positioniert werden.

8. Verfahren nach Anspruch 7, **dadurch gekennzeichnet, daß** das Förderband (23) schneller bewegt wird als die Förderbänder (9, 13) der Fördereinrichtungen (7, 12), so daß die Flaschen (2) relativ zu den Querstücken (11, 15) vorwärts bewegt werden.

9. Verfahren nach Anspruch 7, **dadurch gekennzeichnet, daß** die maximale Geschwindigkeit (W2) des Förderbandes (23) gleich der Geschwindigkeit (W1) der Fördereinrichtungen (7, 12) ist und daß die Querstücke (11, 15) unter Verwendung von Antriebsmitteln rückwärts bewegt werden, um die Flaschen (2) von den Querstücken (11, 15) zu trennen.

## Revendications

1. Appareil pour la vérification en continu du poids de bouteilles dans une machine où les bouteilles sont déplacées le long de plans de défilement (8) par des convoyeurs (7,12) équipés de courroies (9, 13) montées sur des paires de poulies (10,14) ayant un axe vertical, lesdites courroies ayant des traverses (11, 15) régulièrement espacées pour entraîner les bouteilles, de telle sorte que lesdites bouteilles sont amenées et éloignées d'un tourniquet (3) pour le remplissage desdites bouteilles (2), comportant des moyens de pesage (18, 19) disposés en ligne avec lesdits convoyeurs à courroie (7, 12), l'appareil étant **caractérisé en ce que** lesdits plans de défilement (8) présentent chacun une ouverture dans la zone où lesdits moyens de pesage (18, 19) sont situés, **en ce que** lesdits moyens de pesage (18, 19) comprennent chacun un convoyeur à courroie (23) ayant une piste supérieure formant une section de jointoiement pour le plan de défilement (8) et une balance électronique placée sous ledit convoyeur à courroie (23), lesdites bouteilles (2) étant éloignées desdites traverses (11, 15) pendant qu'elles sont pesées.

2. Appareil selon la revendication 1, **caractérisé en ce que** le plateau de ladite balance (20) est sensiblement coplanaire avec ledit plan de défilement (8).

3. Appareil selon la revendication 2, **caractérisé en ce que** ladite piste supérieure dudit convoyeur à courroie (23) glisse sur les plateaux (21) de la balance électronique (20) et forme une section de jointoiement entre les sections dudit plan de défilement (8) divisé par ladite ouverture.

4. Appareil selon la revendication 1, **caractérisé en ce que** ladite balance électronique est montée sur un bâti de support (45) indépendant de la structure de la machine, de telle sorte qu'elle peut être extraite de la machine et facilement installée sur une autre machine.

5. Appareil selon la revendication 1, **caractérisé en ce que** :
ladite balance électronique comprend un plateau (121) fixé de manière pivotante à une extrémité dudit bâti de support, de manière à pouvoir tourner autour d'un axe horizontal (128), l'extrémité libre dudit plateau (121) reposant sur la balance (120) ;
ledit convoyeur à courroie est une courroie sans fin (123) et est monté sur ledit plateau (121), qui est situé avec sa piste supérieure au même niveau que le plan de défilement (8) ;
des moyens d'entraînement (125) sont reliés à ladite courroie sans fin (123) et sont conduits de telle manière que la piste supérieure de la courroie sans fin se déplace selon la direction du mouvement de la courroie (9), légèrement plus vite que cette dernière ;
deux supports de liaison (122) connectent la piste supérieure de la courroie sans fin (123) avec les sections amont et aval de ladite surface de défilement (8).

6. Appareil selon la revendication 1, **caractérisé en ce que** lesdites traverses (11, 15) sont fixées de manière à pouvoir tourner auxdites courroies (9, 13) sur des tétons verticaux (11a) respectifs, et sont conçus pour entraîner, en correspondance avec lesdits moyens de pesage (18, 19) des moyens de frappe adaptés qui ont pour fonction de provoquer une rotation vers l'arrière de ladite traverse (11, 15), allant à l'encontre de la réaction de moyens élastiques adaptés, de manière à provoquer la séparation de ladite traverse (11, 15) desdites bouteilles (2).

7. Méthode pour vérifier en continu le poids de bouteilles dans une machine où les bouteilles sont déplacées le long de plans de défilement (8) par des convoyeurs (7, 12) équipés de courroies (9, 13) montées sur des paires de poulies (10, 14) ayant un axe vertical, lesdites courroies ayant des traverses (11, 15) régulièrement espacées pour entraîner lesdites bouteilles (2), des moyens de pesée (18, 19) étant disposés en ligne avec lesdits convoyeurs à courroie (7, 12), la méthode étant **caractérisée en ce qu'**elle comprend le déplacement vers l'avant des bouteilles (2) pendant l'étape de pesée au moyen d'un convoyeur à courroie (23) ayant une piste supérieure formant une section de jointoiement pour le plan de défilement (8) et une balance électronique placée en dessous dudit convoyeur à courroie (23), de telle sorte que les bouteilles sont rendues indépendantes desdits convoyeurs (7, 12) pendant la pesée.

8. Méthode selon la revendication 7, **caractérisée en ce que** ledit convoyeur à courroie (23) est déplacé plus vite que lesdites courroies (9, 13) dudit convoyeur (7, 12) de manière à faire avancer les bouteilles (2) par rapport aux traverses (11, 15).

9. Méthode selon la revendication 7, **caractérisée en ce que** la vitesse de l'extrémité (W2) dudit convoyeur à courroie (23) est égale à la vitesse (W1) desdits convoyeurs (7, 12) et les traverses (11, 15) sont tournées vers l'arrière par des moyens de frappe de manière à provoquer la séparation desdites bouteilles (2) desdites traverses (11, 15).
